(19)

**Europäisches Patentamt**

**European Patent Office**

**Office européen des brevets**

(11)　**EP 4 538 236 A1**

(12) **EUROPEAN PATENT APPLICATION**

(43) Date of publication:
**16.04.2025　Bulletin 2025/16**

(21) Application number: **24204256.2**

(22) Date of filing: **02.10.2024**

(51) International Patent Classification (IPC):
**C01G 53/50** (2025.01)　　**H01M 4/36** (2006.01)
**C01G 53/504** (2025.01)

(52) Cooperative Patent Classification (CPC):
**H01M 4/364; C01G 53/50; C01G 53/504;
H01M 4/366; H01M 4/505; H01M 4/525;
H01M 10/0525**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **10.10.2023　KR 20230134291**

(71) Applicant: **ECOPRO BM CO., LTD.
Cheongju-si, Chungcheongbuk-do 28116 (KR)**

(72) Inventors:
• **MOON, Chae Won
28116 Cheongju-si, Chungcheongbuk-do (KR)**
• **SON, Yu Jin
28116 Cheongju-si, Chungcheongbuk-do (KR)**
• **YU, Hyun Jong
28116 Cheongju-si, Chungcheongbuk-do (KR)**

(74) Representative: **BCKIP Part mbB
MK1
Landsbergerstraße 98, 3.Stock
80339 München (DE)**

(54) **POSITIVE ELECTRODE ACTIVE MATERIAL AND LITHIUM SECONDARY BATTERY COMPRISING THE SAME**

(57)　The present invention relates to a positive electrode active material and a lithium secondary battery including the same, and more particularly, to a bimodal-type positive electrode active material including a first lithium composite oxide and a second lithium composite oxide with different particle diameters and compositions, and a lithium secondary battery including the same.

**EP 4 538 236 A1**

**Description**

BACKGROUND

**1. Field of the Invention**

The present invention relates to a positive electrode active material and a lithium secondary battery including the same, and more particularly, to a bimodal-type positive electrode active material including a first lithium composite oxide and a second lithium composite oxide with different particle diameters and compositions, and a lithium secondary battery including the same.

**2. Discussion of Related Art**

Batteries store power by using materials capable of undergoing electrochemical reactions at a positive electrode and a negative electrode. A representative example of batteries is a lithium secondary battery that stores electrical energy by the difference in chemical potential when lithium ions are intercalated/deintercalated into/from the positive electrode and the negative electrode.

The lithium secondary battery is manufactured by using materials capable of reversible intercalation/deintercalation of lithium ions as positive and negative electrode active materials and filling an organic electrolyte or a polymer electrolyte between the positive and negative electrodes.

A lithium composite oxide is used as a positive electrode active material for a lithium secondary battery, and as an example, composite oxides such as $LiCoO_2$, $LiMn_2O_4$, $LiNiO_2$, $LiMnO_2$, and the like are being studied.

Among the positive electrode active materials, $LiCoO_2$ is the most widely used due to its excellent lifetime and charge/discharge efficiency, but its price competitiveness is low because cobalt, which is used as a raw material, is expensive as a limited resource.

Lithium manganese oxides such as $LiMnO_2$ and $LiMn_2O_4$ have excellent thermal stability and low costs, but have small capacity and poor high temperature characteristics. In addition, an $LiNiO_2$-based positive electrode active material has high discharge capacity, but is difficult to synthesize due to cation mixing of Li and transition metals, thereby causing a big problem in rate performance.

Therefore, in order to improve the low rate and cycle characteristics of $LiNiO_2$ while maintaining its high reversible capacity, ternary lithium composite oxides such as the so-called NCM (Ni-Co-Mn) and NCA (Ni-Co-Al), in which part of the nickel is substituted with cobalt, manganese, and/or aluminum, or quaternary lithium composite oxides such as NCMA (Ni-Co-Mn-Al) have been developed. Since the reversible capacity is reduced as the nickel content in the ternary or quaternary lithium composite oxide decreases, research has been widely conducted to increase the nickel content in the lithium composite oxide.

Commercially available ternary or quaternary lithium composite oxides include cobalt as an essential element in order to achieve both electrochemical properties and particle stability, which are in a trade-off relation.

However, along with the rapidly increasing demand for lithium secondary batteries in recent years, the cost of raw materials has also increased, and the lithium secondary battery market has faced a strong demand for cost reduction. In particular, the positive electrode active material accounts for the largest part of the costs of a lithium secondary battery, and in the positive electrode active material, cobalt, which is an essential element of ternary or quaternary lithium composite oxides, is not only the most expensive metal, but also has unstable supply and demand. Therefore, there is a growing market demand for a cost-reduced positive electrode active material by adopting a low-cobalt or cobalt-free composition.

However, as described above, in commercially available ternary or quaternary lithium composite oxides, cobalt is an essential element for achieving both electrochemical properties and particle stability.

For example, it has been reported that as the content of cobalt in a ternary or quaternary lithium composite oxide decreases, microcracks occur in the particles due to volume contraction/expansion (e.g. stress-causing anisotropic changes) of the lithium composite oxide during charging/discharging. As more microcracks occur in the particles, an electrolyte penetrates into the particles along the microcracks, accelerating particle decomposition, which may lead to a reduction in the performance of the lithium secondary battery.

In addition, as the content of cobalt in the ternary or quaternary lithium composite oxide decreases, the resistance of the positive electrode active material increases, reducing the rate performance, so even when a low-cobalt (generally a cobalt content of 10 mol% or less) or a cobalt-free composition is adopted, there is a need to develop a positive electrode active material to keep the electrochemical properties at a level similar to that of commercially available positive electrode active materials.

SUMMARY OF THE INVENTION

In the lithium secondary battery market, the growth of lithium secondary batteries for electric vehicles is the driving force, and accordingly, the demand for positive electrode active materials used in the lithium secondary batteries is continuously increasing.

For example, conventionally, lithium secondary batteries using lithium iron phosphate (LFP) have been mainly used in terms of ensuring safety, but recently, the use of nickel-based lithium composite oxides, which have a higher energy capacity per weight than LFP, is expanding (of course, relatively inexpensive LFP is still used to reduce costs).

In general, nickel-based lithium composite oxides, which have recently been mainly used as positive electrode active materials for high-capacity lithium secondary batteries, have a ternary composition such as NCM (Ni-Co-Mn) and NCA (Ni-Co-Al) or a quaternary composition such as NCMA (Ni-Co-Mn-Al). However, due to the unstable supply and demand of cobalt and excessively high prices of cobalt compared to other raw materials, there is a need to develop a positive electrode active material with a low-cobalt or cobalt-free composition.

Recently, positive electrode active materials with a low-cobalt or cobalt-free composition have been introduced by several companies, but the prevailing opinion is that their electrochemical properties and stability are still insufficient to replace existing commercialized positive electrode active materials.

For example, as described above, as the content of cobalt in a ternary or quaternary lithium composite oxide decreases, the resistance of the positive electrode active material increases, and the electrochemical properties, such as rate performance, of a lithium secondary battery are inevitably reduced.

In addition, it has been pointed out that as the content of cobalt in a ternary or quaternary lithium composite oxide decreases, the stability of the particles (crystal stability, thermal stability, or particle strength, etc.) rapidly decreases, and thus the lifetime of a lithium secondary battery using the lithium composite oxide as a positive electrode active material may deteriorate early.

Although the electrochemical properties and stability of commercially available ternary or quaternary lithium composite oxides with an existing low-cobalt or cobalt-free composition are somewhat low, the present inventors confirmed that a bimodal-type positive electrode active material designed to include a nickel-based lithium composite oxide including cobalt and a cobalt-free lithium composite oxide can have electrochemical properties and stability at a level that allows commercialization.

Accordingly, the present invention is directed to providing a bimodal-type positive electrode active material including a first lithium composite oxide and a second lithium composite oxide with different particle diameters and compositions, wherein a nickel-based lithium composite oxide and a cobalt-free lithium composite oxide are present in a bimodal form, thereby improving the electrochemical properties and stability of the positive electrode active material compared to an existing lithium composite oxide with a low-cobalt or cobalt-free composition.

The present invention is also directed to providing a positive electrode including the positive electrode active material defined herein.

The present invention is also directed to providing a lithium secondary battery using the positive electrode defined herein.

The objects of the present invention are not limited to the objects described above (such as for electric vehicles), and other objects and advantages of the present invention that are not described can be understood by the following description and more clearly understood by the embodiments of the present invention. In addition, it is apparent that the objects and advantages of the present invention can be realized by the means and combinations thereof indicated in the claims.

According to an aspect of the present invention for solving the above technical problems, there is provided a bimodal-type positive electrode active material including a first lithium composite oxide and a second lithium composite oxide with an average particle diameter larger than that of the first lithium composite oxide.

In an embodiment of the present invention, the first lithium composite oxide may include first bulk particles including at least nickel and cobalt, and the second lithium composite oxide may include cobalt-free second bulk particles.

In an embodiment of the present invention, the first bulk particle may be represented by Chemical Formula 1 below.

$$[\text{Chemical Formula 1}] \qquad Li_wNi_{1-(x+y+z)}Co_xM1_yM2_zO_2$$

Wherein, M1 is at least one selected from Mn and Al, M2 is at least one selected from P, Sr, Ba, B, Ce, Cr, Mn, Mo, Na, K, Ti, Zr, Al, Hf, Ta, Mg, V, Zn, Si, Y, Sn, Ge, Nb, W, Ca, Ga, Sb, Fe, Nd, and Cu, M1 and M2 are different, and $0.5 \leq w \leq 1.5$, $0 < x \leq 0.40$, $0 \leq y \leq 0.30$, $0 \leq z \leq 0.20$.

In an embodiment of the present invention, the second bulk particle may be represented by Chemical Formula 2 below.

[Chemical Formula 2]     $Li_aNi_{1-(b+c)}M3_bM4_cO_{2-\alpha}X_\alpha$

Wherein, M3 is at least one selected from Mn and Al, M4 is at least one selected from Sr, Ba, B, Ce, Cr, Mn, Mo, Na, K, Ti, Zr, Al, Hf, Ta, Mg, V, Zn, Si, Y, Sn, Ge, Nb, W, Ca, Ga, Sb, Fe, Nd, and Cu, M3 and M4 are different, X is at least one anionic element selected from F, P, S, Cl, and Br, and $0.5 \leq a \leq 1.5$, $0 \leq b \leq 0.50$, $0 \leq c \leq 0.20$, $0 \leq \alpha \leq 0.20$.

In some embodiments of the present invention, in order to improve electrochemical properties and stability compared to an existing lithium composite oxide with a low-cobalt or cobalt-free composition, a coating layer may be formed on the surface of the first bulk particle in the bimodal-type positive electrode active material.

Specifically, a coating layer is present on at least a part of the surface of the first bulk particle, and the coating layer may include a metal oxide represented by Chemical Formula 3 below.

[Chemical Formula 3]     $Li_dM5_eO_f$

Wherein, M5 is at least one selected from Ni, Co, P, Sr, Ba, B, Ce, Cr, Mn, Mo, Na, K, Ti, Zr, Al, Hf, Ta, Mg, V, Zn, Si, Y, Sn, Ge, Nb, W, Ca, Ga, Sb, Fe, Nd, and Cu, $0 \leq d \leq 8$, $0 < e \leq 8$, $0 < f \leq 13$, and d, e, and f represent numbers determined from the stoichiometric ratio according to the valence of M5.

In addition, the electrochemical properties and stability may be improved compared to an existing lithium composite oxide with a low-cobalt or cobalt-free composition by ensuring that cobalt is present at an appropriate level based on the overall composition of the bimodal-type positive electrode active material.

To this end, the coating layer present on the surface of the first bulk particle may include a cobalt-containing oxide.

In another embodiment of the present invention, in order to improve electrochemical properties and stability compared to an existing lithium composite oxide with a low-cobalt or cobalt-free composition, a coating layer may be formed on the surface of the second bulk particle in the bimodal-type positive electrode active material. A coating layer may be present on both the surfaces of the first and second bulk particles in the positive electrode active material.

Specifically, a coating layer is present on at least a part of the surface of the second bulk particle, and the coating layer may include a metal oxide represented by Chemical Formula 4 below.

[Chemical Formula 4]     $Li_gM6_hO_i$

Wherein, M6 is at least one selected from Ni, Co, P, Sr, Ba, B, Ce, Cr, Mn, Mo, Na, K, Ti, Zr, Al, Hf, Ta, Mg, V, Zn, Si, Y, Sn, Ge, Nb, W, Ca, Ga, Sb, Fe, Nd, and Cu, $0 \leq g \leq 8$, $0 < h \leq 8$, $0 < i \leq 13$, and g, h, and i represent numbers determined from the stoichiometric ratio according to the valence of M6.

In still another embodiment of the present invention, a coating layer is present on at least a part of the surface of the second bulk particle, and the coating layer may include a compound represented by LiX' (X' is an anionic element selected from F, Cl, and Br). For example, the compound represented by LiX' may include LiF. In yet another embodiment of the present invention, the coating layer may include lithium sulfide, lithium sulfate or lithium phosphate.

In addition, the electrochemical properties and stability may be improved compared to an existing lithium composite oxide with a low-cobalt or cobalt-free composition by ensuring that cobalt is present at an appropriate level based on the overall composition of the bimodal-type positive electrode active material.

To this end, the coating layer present on the surface of the second bulk particle may include a cobalt-containing oxide.

According to another aspect of the present invention, there is provided a positive electrode including the positive electrode active material described above.

According to still another aspect of the present invention, there is provided a lithium secondary battery using the positive electrode described above.

BRIEF DESCRIPTION OF THE DRAWINGS

The above and other objects, features and advantages of the present invention will become more apparent to those of ordinary skill in the art by describing exemplary embodiments thereof in detail with reference to the accompanying drawings, in which:

FIG. 1 shows the dQ/dV profile during initial discharge of a lithium secondary battery according to changes in the mole fraction of nickel and manganese in a positive electrode active material (lithium composite oxide);
FIG. 2 shows the dQ/dV profile during initial discharge of lithium secondary batteries manufactured using the positive electrode active materials according to Examples 1 to 3; and
FIG. 3 shows the dQ/dV profile during initial discharge of lithium secondary batteries manufactured using the positive electrode active materials according to Comparative Examples 1 to 3.

DETAILED DESCRIPTION OF EXEMPLARY EMBODIMENTS

For a better understanding of the present invention, certain terms are defined herein for convenience. Unless otherwise defined herein, scientific and technical terms used in the present invention will have meanings commonly understood by those skilled in the art. In addition, unless otherwise specified in the context, the singular should be understood to include the plural, and the plural should be understood to include the singular. Amounts or ratios indicated herein are molar amounts or molar ratios, unless otherwise specified in the context.

Hereinafter, the positive electrode active material according to the present invention and a lithium secondary battery including the same will be described in more detail.

Positive electrode active material

According to an aspect of the present invention, there is provided a bimodal-type positive electrode active material including a first lithium composite oxide and a second lithium composite oxide with different particle diameters and compositions.

In an embodiment of the present invention, the bimodal-type positive electrode active material may include a first lithium composite oxide and a second lithium composite oxide with an average particle diameter larger than that of the first lithium composite oxide. The first lithium composite oxide having a relatively small average particle diameter may be referred to as a small particle, and the second lithium composite oxide having a relatively large average particle diameter may be referred to as a large particle.

The particle size distribution and the average particle diameter of the first lithium composite oxide and the second lithium composite oxide in the positive electrode active material may be measured using a laser diffraction method. For example, after dispersing the lithium composite oxide (a small particle or a large particle) in a dispersion medium and irradiating the same with ultrasonic waves at about 28 kHz at an output of 60 W using a commercially available laser diffraction particle size measurement device (such as Microtrac MT 3000), a volume cumulative particle size distribution graph is obtained, and the particle size corresponding to 50% of the volume cumulative amount can be defined as the average particle diameter ($D_{50}$). In other cases, the average particle diameter of the first lithium composite oxide and the second lithium composite oxide in the positive electrode active material may be calculated as the average value of the particle diameters of small and large particles confirmed through an SEM image. As used herein, the term "particle size" has the same meaning as "particle diameter".

In the present application, the range of the average particle diameter (D50) of small and large particles is not particularly limited.

For example, the small particle may refer to a lithium composite oxide with an average particle diameter (D50) of 7 μm or less, 6.5 μm or less, 6 μm or less, 5.5 μm or less, 5 μm or less, 4.5 μm or less, 4 μm or less, 3.5 μm or less, or 3 μm or less. In order to prevent excessive aggregation of the small particles, the average particle diameter (D50) of the small particles is preferably 0.5 μm or more, 1 μm or more, 1.5 μm or more, or 2 μm or more. For example, the large particle may refer to a lithium composite oxide with an average particle diameter (D50) of more than 7 μm, 7.5 μm or more, 8 μm or more, 8.5 μm or more, 9 μm or more, 9.5 μm or more, 10 μm or more, 10.5 μm or more, 11 μm or more, 11.5 μm or more, or 12 μm or more. To ensure that pores formed by the large particles are sufficiently filled with small particles with a relatively small average particle diameter, the average particle diameter (D50) of the large particles is preferably 30 μm or less, 27.5 μm or less, 25 μm or less, 22.5 μm or less, 20 μm or less, 17.5 μm or less, or 15 μm or less.

In the bimodal-type positive electrode active material according to various embodiments of the present invention, the first lithium composite oxide and the second lithium composite oxide are present in a state of being mixed at a weight ratio of 5:95, 10:90, 15:85, 20:80, 25:75, 30:70, 35:65, 40:60, 45:55, 50:50, 55:45, 60:40, 65:35, 70:30, 75:25, or 80:20, and in addition, the first lithium composite oxide and the second lithium composite oxide may be present in a state of being mixed at an arbitrary weight ratio between 5:95 and 80:20.

At this time, the first lithium composite oxide may be present in a form of filling the pores between the second lithium composite oxides, may be attached to the surface of the second lithium composite oxide, or may be present as an aggregate of the first lithium composite oxides. However, preferably, the first lithium composite oxide with a relatively small average particle diameter sufficiently fills the pores formed by a plurality of second lithium composite oxides.

The integration density of the lithium composite oxide in a unit volume is improved by filling the gap between large particles with small particles with a relatively small average particle diameter, thereby increasing the energy density per unit volume. In addition, it is possible to alleviate volume changes or minimize the generation of stress due to volume changes during charging/discharging by filling the gap between large particles with small particles with a relatively small average particle diameter, thereby preventing the occurrence of microcracks.

When the ratio of the first lithium composite oxide to the second lithium composite oxide in the positive electrode active material is excessively small, it may be difficult to sufficiently fill the pores formed by the second lithium composite oxides with the first lithium composite oxides. On the other hand, when the ratio of the first lithium composite oxide to the second lithium composite oxide in the positive electrode active material is excessively large, the agglomeration of the first lithium composite oxides in the positive electrode active material increases, and the press density of the positive electrode active material decreases, thereby reducing the stability of the positive electrode active material.

In an embodiment of the present invention, the first lithium composite oxide may include first bulk particles including at least nickel and cobalt, and the second lithium composite oxide may include cobalt-free second bulk particles. Here, bulk particles refer to single particles or secondary particles. The cobalt-free second bulk particles means that the second bulk particles do not substantially include cobalt. However, in some embodiments of the present invention, when a coating layer is present on at least a part of the surface of the second bulk particles, the coating layer may include cobalt. Therefore, even though a cobalt-containing coating layer is present on at least a part of the surface of the second bulk particles, when the second bulk particles do not include cobalt, the second bulk particles may be defined as having a cobalt-free composition. In addition, the second lithium composite oxide may include cobalt-free second bulk particles including at least nickel and manganese.

For example, particles having an average particle diameter and a composition defined as the first lithium composite oxide and the second lithium composite oxide may be non-aggregated single particles or secondary particles in which a plurality of primary particles are aggregated. The single particles and secondary particles may be referred to as bulk particles.

Therefore, the first bulk particles refer to single particles and secondary particles having an average particle diameter and a composition defined as the first lithium composite oxide, and the second bulk particles refer to single particles and secondary particles having an average particle diameter and a composition defined as the second lithium composite oxide.

As described above, in the case of a bimodal-type positive electrode active material, the integration density of the lithium composite oxide in a unit volume is improved and the energy density per unit volume is increased by filling the gap between large particles with small particles having a relatively small average particle diameter, thereby reducing stress due to volume changes during the charging/discharging and preventing the occurrence of microcracks.

However, since small particles have a relatively larger specific surface area compared to large particles in the bimodal-type positive electrode active material, there is a high possibility of side reactions with an electrolyte (such as an initial irreversible reaction of forming a solid electrolyte interphase (SEI)). Due to this side reaction mechanism, the deterioration rate of small particles may be faster than that of large particles. In addition, in the case of a lithium composite oxide in which manganese may be eluted at high temperatures, the elution of manganese may become more active as the specific surface area increases, accelerating the reduction of lifetime as charging/discharging is repeated.

Thus, when first bulk particles, which are small particles, have a composition including at least nickel and cobalt, and second bulk particles, which are large particles, have a cobalt-free composition, it is possible to improve electrochemical properties and stability compared to an existing lithium composite oxide with a low-cobalt or cobalt-free composition while lowering the cobalt content in the overall composition (bulk composition) of the bimodal-type positive electrode active material, which is advantageous in achieving the object of reducing the cost of the positive electrode active material.

It is preferable that the mole fraction of nickel in the first bulk particles is greater than the mole fraction of nickel in the second bulk particles, and the mole fraction of manganese in the first bulk particles is smaller than the mole fraction of manganese in the second bulk particles.

To evaluate the electrochemical properties or electrochemical behavior of the positive electrode active material, a dQ/dV graph that differentiates the battery capacity with respect to the voltage after charging/discharging is often used. For example, when a lithium secondary battery including a positive electrode, which uses any lithium composite oxide including nickel and manganese as a positive electrode active material, and a lithium foil as a negative electrode is charge/discharged at 25 °C, a voltage range of 3.0 V to 4.4 V, and a discharge rate of 0.1 C, peaks representing the H2 (hexagonal2) $\rightarrow$ H3 (hexagonal3) phase transition are observed in the charging region in the voltage range of 4.1 V to 4.3 V in a graph where the X-axis is set to the voltage (V) at initial discharge, the Y-axis is set to the battery capacity (Q) at initial discharge, and the differential capacity (dQ/dV) obtained by differentiating the battery capacity (Q) with respect to the voltage (V) is shown. In general, as the mole fraction of manganese in a lithium composite oxide increases, the voltage range in which the H2 $\rightarrow$ H3 peaks are observed moves to a relatively high voltage. For example, when the mole fraction of manganese in a lithium composite oxide is about 10%, the H2 $\rightarrow$ H3 peaks are observed at about 4.21 V, and when the mole fraction of manganese increases to about 20%, the H2 $\rightarrow$ H3 peaks are observed at about 4.26 V

As the voltage range in which the H2 $\rightarrow$ H3 peaks are observed moves to the right in the dQ/dV profile of a positive electrode active material, the positive electrode active material may have appropriate capacity at a relatively high voltage. However, as the voltage range in which the positive electrode active material may have appropriate capacity increases, problems such as reduced stability or early deterioration of the positive electrode active material may occur, and gas generation due to side reactions may be accelerated.

Accordingly, according to an embodiment of the present invention, it is possible to lower the voltage range in which the positive electrode active material may have appropriate capacity by providing a bimodal-type positive electrode active material in which the mole fraction of nickel in the first bulk particles is greater than the mole fraction of nickel in the second bulk particles and the mole fraction of manganese in the first bulk particles is smaller than the mole fraction of manganese in the second bulk particles.

The first bulk particle is represented by Chemical Formula 1 below and is a lithium composite oxide with a layered crystal structure.

[Chemical Formula 1] $\quad Li_wNi_{1-(x+y+z)}Co_xM1_yM2_zO_2$

Wherein, M1 is at least one selected from Mn and Al, M2 is at least one selected from P, Sr, Ba, B, Ce, Cr, Mn, Mo, Na, K, Ti, Zr, Al, Hf, Ta, Mg, V, Zn, Si, Y, Sn, Ge, Nb, W, Ca, Ga, Sb, Fe, Nd, and Cu, M1 and M2 are different, and $0.5 \le w \le 1.5$, $0 < x \le 0.40$, $0 \le y \le 0.30$, $0 \le z \le 0.20$.

w, which represents the ratio of lithium to all elements excluding lithium in the first bulk particles (Li/(Ni+Co+M1+M2)), may be 0.5 or more and 1.5 or less, 0.75 or more and 1.25 or less, 0.90 or more and 1.1 or less, or 0.95 or more and 1.05 or less.

In an embodiment of the present invention, the first bulk particle may be a lithium nickel-based composite oxide in which the mole fraction of nickel to all elements excluding lithium in the first bulk particles (Ni/(Ni+Co+M1+M2)) is 60% or more. In this case, x+y+z in Chemical Formula 1 is 0.40 or less.

According to another embodiment of the present invention, the mole fraction of nickel to all elements excluding lithium in the first bulk particles (Ni/(Ni+Co+M1+M2)) may be 65% or more (where x+y+z is 0.35 or less), 70% or more (where x+y+z is 0.30 or less), 75% or more (where x+y+z is 0.25 or less), 80% or more (where x+y+z is 0.20 or less), 85% or more (where x+y+z is 0.15 or less), or 90% or more (where x+y+z is 0.10 or less).

In the first bulk particles, the mole fraction of cobalt to all elements excluding lithium (Co/(Ni+Co+M1+M2)) may be 40% or less (where x is 0.40 or less), 35% or less (where x is 0.35 or less), 30% or less (where x is 0.30 or less), 25% or less (where x is 0.25 or less), 20% or less (where x is 0.20 or less), 15% or less (where x is 0.15 or less), or 10% or less (where x is 0.10 or less).

When the first bulk particles include manganese and/or aluminum, the mole fraction of manganese and/or aluminum to all elements excluding lithium in the first bulk particles (M1/(Ni+Co+M1+M2)) may be 30% or less (where y is 0.30 or less), 25% or less (where y is 0.25 or less), 20% or less (where y is 0.20 or less), 15% or less (where y is 0.15 or less), 10% or less (where y is 0.10 or less), or 5% or less (where y is 0.05 or less).

In addition, in order to improve the electrochemical properties of the first bulk particles, a dopant (M2) may be included in the first bulk particles.

When the first bulk particles optionally include a dopant, the dopant may include at least one selected from P, Sr, Ba, B, Ce, Cr, Mn, Mo, Na, K, Ti, Zr, Al, Hf, Ta, Mg, V, Zn, Si, Y, Sn, Ge, Nb, W, Ca, Ga, Sb, Fe, Nd, and Cu, or at least one selected from P, Sr, Ba, B, Ce, Cr, Mo, Na, K, Ti, Zr, Hf, Ta, Mg, V, Zn, Si, Y, Sn, Ge, Nb, W, Ca, Ga, Sb, Fe, Nd, and Cu. The type and combination of the dopant may be appropriately selected within a range that does not negatively affect the electrochemical properties and stability of not only the first bulk particles but also the bimodal-type positive electrode active material including the first bulk particles and the second bulk particles.

When the first bulk particles includes a dopant, the mole fraction of the dopant to all elements excluding lithium in the first bulk particles (M2/(Ni+Co+M1+M2)) may be 20% or less (where z is 0.20 or less), 10% or less (where z is 0.10 or less), 5% or less (where z is 0.05 or less), 4% or less (where z is 0.04 or less), 3% or less (where z is 0.03 or less), 2% or less (where z is 0.02 or less), 1% or less (where z is 0.01 or less), 0.5% or less (where z is 0.005 or less), 0.4% or less (where z is 0.004 or less), 0.3% or less (where z is 0.003 or less), 0.2% or less (where z is 0.002 or less), or 0.1% or less (where z is 0.001 or less).

The upper and lower limits of the contents of nickel, cobalt, M1, and M2, defined in Chemical Formula 1 may be appropriately selected within a range that satisfies the above-described definitions.

The second bulk particle is represented by Chemical Formula 2 below and is a lithium composite oxide with a layered crystal structure.

[Chemical Formula 2] $\quad Li_aNi_{1-(b+c)}M3_bM4_cO_{2-\alpha}X_\alpha$

Wherein, M3 is at least one selected from Mn and Al, M4 is at least one selected from Sr, Ba, B, Ce, Cr, Mn, Mo, Na, K, Ti, Zr, Al, Hf, Ta, Mg, V, Zn, Si, Y, Sn, Ge, Nb, W, Ca, Ga, Sb, Fe, Nd, and Cu, M3 and M4 are different, X is at least one anionic element selected from F, P, S, Cl, and Br, and $0.5 \le a \le 1.5$, $0 \le b \le 0.50$, $0 \le c \le 0.20$, $0 \le \alpha \le 0.20$.

a, which represents the ratio of lithium to all elements excluding lithium in the second bulk particles (Li/(Ni+Co+M1+M2)) may be 0.5 or more and 1.5 or less, 0.75 or more and 1.25 or less, 0.90 or more and 1.1 or less, or 0.95 or more and 1.05 or less.

As shown in Chemical Formula 2, at least some of the oxygen of the second bulk particle may be substituted by at least one anionic element selected from F, P, S, Cl, and Br, with F being preferred. In particular, since F has an ionic radius similar to oxygen, F may be present more stably in the crystal structure of the second bulk particle compared to other anionic elements. In addition, F may strengthen the crystal structure of the second bulk particle, which deteriorates due to the inclusion of cobalt, by partially replacing the oxygen forming a M (metal)-O bond and forming a strong M-F bond.

In an embodiment of the present invention, the mole fraction of nickel among the metal elements excluding lithium in the second bulk particles (Ni/(Ni+M3+M4)) (corresponding to "1-(b+c)" in Chemical Formula 2) may be 0.50 to 0.95, 0.60 to 0.90, or 0.70 to 0.80.

In Chemical Formula 2, when M3 is manganese, the mole fraction of manganese among the metal elements excluding lithium in the second bulk particles (M3/(Ni+M3+M4)) (corresponding to "b" in Chemical Formula 2) may be 0.05 to 0.50, 0.10 to 0.40, or 0.10 to 0.30. In this case, "b+c" in Chemical Formula 2 may be 0.50 or less, 0.45 or less, 0.40 or less, 0.35 or less, or 0.30 or less.

When the mole fraction of nickel in the second bulk particles is less than 0.50, the proportion of lithium composite oxide having a spinel crystal structure in the second bulk particles may increase. Given that a higher operating voltage is required as the proportion of lithium composite oxide having a spinel crystal structure in the second bulk particles increases, the capacity characteristics of a lithium secondary battery using the second bulk particles as a positive electrode active material may be reduced. In addition, as the nickel content in the second bulk particles decreases, the overall cation mixing in the lithium composite oxide may increase due to the increased manganese.

Specifically, the charge of all transition metals constituting the lithium composite oxide preferably has a valence of three to maintain a stable charge neutral state. At this time, since $Mn^{4+}$ becomes excessive when a lithium composite oxide with a low cobalt content and a high manganese content is synthesized, the content of $Ni^{2+}$, instead of $Ni^{3+}$, increases to exhibit the charge neutral state. Since $Ni^{2+}$ (0.69 Å), which is present in excess during the synthesis reaction, has a size similar to $Li^+$ (0.76 Å), it may occupy the 3a site of Li in the crystal structure of the lithium composite oxide, which is called cation mixing.

On the other hand, when nickel is present in excess in the second bulk particles, the lithium composite oxide has characteristics similar to $LiNiO_2$. $LiNiO_2$ not only has low thermal stability, but also when internal short circuits occur due to external pressure during charging, the lithium composite oxide may decompose on its own or the lithium secondary battery may rupture or ignite due to side reactions between an electrolyte and the interface and the surface of the lithium composite oxide.

Meanwhile, when the mole fraction of manganese in the second bulk particles is more than 0.50, the same problems as when the mole fraction of nickel is less than 0.50 may occur.

In order to improve the electrochemical properties of the second bulk particles with a cobalt-free composition, a dopant (M4) may be included in the second bulk particles.

When the second bulk particles optionally include a dopant, the dopant may include at least one selected from Sr, Ba, B, Ce, Cr, Mn, Mo, Na, K, Ti, Zr, Al, Hf, Ta, Mg, V, Zn, Si, Y, Sn, Ge, Nb, W, Ca, Ga, Sb, Fe, Nd, and Cu, or Sr, Ba, B, Ce, Cr, Mo, Na, K, Ti, Zr, Hf, Ta, Mg, V, Zn, Si, Y, Sn, Ge, Nb, W, Ca, Ga, Sb, Fe, Nd, and Cu. The type and combination of the dopant may be appropriately selected within a range that does not negatively affect the electrochemical properties and stability of not only the second bulk particles but also the bimodal-type positive electrode active material including the first bulk particles and the second bulk particles.

When the second bulk particles include a dopant, the mole fraction of the dopant to all elements excluding lithium in the second bulk particles (M4/(Ni+M3+M4)) may be 20% or less (where c is 0.20 or less), 10% or less (where c is 0.10 or less), 5% or less (where c is 0.05 or less), 4% or less (where c is 0.04 or less), 3% or less (where c is 0.03 or less), 2% or less (where c is 0.02 or less), 1% or less (where c is 0.01 or less), 0.5% or less (where c is 0.005 or less), 0.4% or less (where c is 0.004 or less), 0.3% or less (where c is 0.003 or less), 0.2% or less (where c is 0.002 or less), or 0.1% or less (where c is 0.001 or less).

In some embodiments of the present invention, in order to improve electrochemical properties and stability compared to an existing lithium composite oxide with a low-cobalt or cobalt-free composition, a coating layer may be formed on the surface of the first bulk particles in the bimodal-type positive electrode active material. At this time, a coating layer may be optionally present on the surface of the second bulk particles.

Specifically, a coating layer is present on at least a part of the surface of the first bulk particles, and the coating layer may include a metal oxide represented by Chemical Formula 3 below. The metal oxide represented by Chemical Formula 3 below is an oxide with a different composition from the first bulk particles.

[Chemical Formula 3]     $Li_d M5_e O_f$

Wherein, M5 is at least one, preferably one or two elements selected from Ni, Co, P, Sr, Ba, B, Ce, Cr, Mn, Mo, Na, K, Ti, Zr, Al, Hf, Ta, Mg, V, Zn, Si, Y, Sn, Ge, Nb, W, Ca, Ga, Sb, Fe, Nd, and Cu. d, e, and f represent numbers determined from the stoichiometric ratio according to the valence of M5. For example, d, e, and f may be appropriately selected from the ranges of $0 \leq d \leq 8$, $0 < e \leq 8$, and $0 < f \leq 13$, respectively.

In addition, it is possible to improve electrochemical properties and stability compared to an existing lithium composite oxide with a low-cobalt or cobalt-free composition by ensuring that cobalt is present at an appropriate level based on the overall composition of the bimodal-type positive electrode active material.

To this end, the coating layer present on the surface of the first bulk particles may include a cobalt-containing oxide. The cobalt-containing oxide may be represented by $Co_eO_f$ and/or $Li_dCo_eO_f$.

When a coating layer including a cobalt-containing oxide is formed on the surface of the first bulk particles, the mole fraction of cobalt among the metal elements excluding lithium may be 0.15 or less, preferably 0.11 or less, based on the overall composition of the first bulk particles and the coating layer.

In another embodiment of the present invention, in order to improve the electrochemical properties and stability of an existing lithium composite oxide with a low-cobalt or cobalt-free composition, a coating layer may be formed on the surface of the second bulk particles in the bimodal-type positive electrode active material. At this time, a coating layer may be present on both the surfaces of the first bulk particles and the second bulk particles in the positive electrode active material.

Specifically, a coating layer may be present on at least a part of the surface of the second bulk particles, and the coating layer may include a metal oxide represented by Chemical Formula 4 below. The metal oxide represented by Chemical Formula 4 below is an oxide with a different composition from the second bulk particles.

$$[\text{Chemical Formula 4}] \qquad Li_gM6_hO_i$$

Wherein, M6 is at least one, preferably one or two elements selected from Ni, Co, P, Sr, Ba, B, Ce, Cr, Mn, Mo, Na, K, Ti, Zr, Al, Hf, Ta, Mg, V, Zn, Si, Y, Sn, Ge, Nb, W, Ca, Ga, Sb, Fe, Nd, and Cu. g, h, and i represent numbers determined from the stoichiometric ratio according to the valence of M6. For example, g, h, and i may be appropriately selected from the ranges of $0 \leq g \leq 8$, $0 < h \leq 8$, and $0 < i \leq 13$, respectively.

In addition, it is possible to improve electrochemical properties and stability compared to an existing lithium composite oxide with a low-cobalt or cobalt-free composition by ensuring that cobalt is present at an appropriate level based on the overall composition of the bimodal-type positive electrode active material.

To this end, the coating layer present on the surface of the second bulk particles may include a cobalt-containing oxide. The cobalt-containing oxide may be represented by $Co_eO_f$ and/or $Li_dCo_eO_f$.

As described above, the cobalt-free second bulk particles mean that the second bulk particles do not substantially include cobalt. As described above, even though a cobalt-containing coating layer is present on at least a part of the surface of the second bulk particles, the second bulk particles do not include cobalt, and thus the second bulk particles may be a cobalt-free lithium composite oxide.

When a coating layer including a cobalt-containing oxide is formed on the surface of the second bulk particles, based on the overall composition including the second bulk particles and the coating layer, the mole fraction of cobalt among the metal elements excluding lithium may be 0.05 or less, 0.04 or less, 0.03 or less, or 0.02 or less.

In another embodiment of the present invention, a coating layer is present on at least a part of the surface of the second bulk particles, and the coating layer may include a compound represented by LiX' (X' is an anion elected from F, Cl, and Br). For example, the compound represented by LiX' may include LiF. LiF may be formed by a reaction of a fluorine-containing polymer and lithium impurities (such as LiOH and $Li_2CO_3$) present on the surface of the second bulk particles. In still another embodiment of the present invention, the coating layer may include lithium sulfide, lithium sulfate, or lithium phosphate. In the case of lithium phosphate, a metal element may be optionally included. The metal element may be at least one selected from M3 and M4.

Based on the overall composition (bulk composition) of the positive electrode active material including the first lithium composite oxide and the second lithium composite oxide, the mole fraction of cobalt among the metal elements excluding lithium may be 0.005 or more and 0.05 or less, 0.005 or more and 0.045 or less, 0.005 or more and 0.040 or less, 0.005 or more and 0.035 or less, 0.01 or more and 0.045 or less, 0.01 or more and 0.040 or less, and 0.01 or more and 0.035 or less. As used herein, the phrase "overall composition (bulk composition) of the positive electrode active material" refers to the average composition of the first lithium composite oxide and the second lithium composite oxide that constitute the bimodal-type positive electrode active material.

When the mole fraction of cobalt is less than 0.005 based on the overall composition of the bimodal-type positive electrode active material, the particle stability (crystal stability, thermal stability, or particle strength, etc.) of the first lithium composite oxide and the second lithium composite oxide is insufficient, making it difficult to exhibit stable electrochemical properties of a lithium secondary battery. On the other hand, when the mole fraction of cobalt is more than 0.05 based on the overall composition of the bimodal-type positive electrode active material, it does not satisfy the object of the present invention to reduce the cost of the positive electrode active material by improving electrochemical properties and stability compared to an existing lithium composite oxide with a low-cobalt or cobalt-free composition and ultimately lowering the cobalt content in the overall composition (bulk composition) of the bimodal-type positive electrode active material.

In addition, based on the overall composition (bulk composition) of the bimodal-type positive electrode active material including the first lithium composite oxide and the second lithium composite oxide, the mole fraction of manganese among the metal elements excluding lithium may be 0.10 or more and 0.40 or less, 0.10 or more and 0.35 or less, 0.10 or more and 0.30 or less, 0.10 or more and 0.25 or less, 0.15 or more and 0.35 or less, 0.15 or more and 0.35 or less, 0.15 or more and 0.30 or less, 0.15 or more and 0.25 or less, 0.17 or more and 0.40 or less, 0.17 or more and 0.35 or less, 0.17 or more and 0.30 or less, or 0.17 or more and 0.25 or less.

When the mole fraction of manganese is less than 0.10 based on the overall composition of the bimodal-type positive electrode active material, the capacity characteristics (especially discharge capacity) and rate performance of the bimodal-type positive electrode active material may be insufficient. On the other hand, when the mole fraction of manganese is more than 0.40 based on the overall composition of the bimodal-type positive electrode active material, the voltage range in which the positive electrode active material has appropriate capacity may become excessively high.

When the manganese content is adjusted within the above range based on the overall composition (bulk composition) of the bimodal-type positive electrode active material including the first lithium composite oxide and the second lithium composite oxide, a lithium secondary battery using the positive electrode active material has the following dQ/dV plot.

Specifically, when a lithium secondary battery using the positive electrode active material in a positive electrode and a lithium foil as a negative electrode is charged/discharged at 25 °C, a voltage range of 3.0 V to 4.4 V, and a discharge rate of 0.1 C, there may be peaks within the charging region in the voltage range of 4.1 V to 4.2 V (more specifically, 4.2 V or less) in a graph where the X-axis is set to the voltage (V) at initial discharge, the Y-axis is set to the battery capacity (Q) at initial discharge, and the differential capacity (dQ/dV) obtained by differentiating the battery capacity (Q) with respect to the voltage (V) is shown.

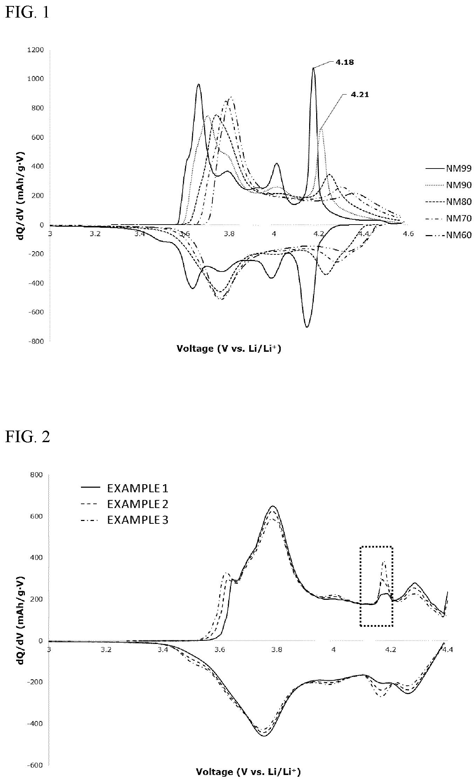

Generally, the peaks in the charging region in the voltage range of 4.1 V to 4.3 V are peaks that represent the H2 (hexagonal2) → H3 (hexagonal3) phase transition. As the mole fraction of manganese in the lithium composite oxide increases, the voltage range in which the H2 → H3 peaks are observed moves to a relatively high voltage. For example, referring to FIG. 1, which shows the dQ/dV profile during initial discharging of a lithium secondary battery according to changes in the mole fraction of nickel and manganese in the positive electrode active material (lithium composite oxide) (NM99 - Ni:Mn = 99:1; NM90 - Ni:Mn = 90:10; NM80 - Ni:Mn = 80:20; NM70 - Ni:Mn = 70:30; NM60 - Ni:Mn = 60:40), when the mole fraction of manganese in the lithium composite oxide is about 10%, the H2 → H3 peaks are observed at about 4.21 V, and when the mole fraction of manganese increases to about 20%, the H2 → H3 peaks shift to a high voltage range and are observed at about 4.26 V

As described above, when the cobalt content is reduced in a commercially available ternary or quaternary lithium composite oxide, the nickel or manganese content inevitably increases. In particular, when the manganese content in the lithium composite oxide increases, the voltage range in which the positive electrode active material has appropriate capacity increases, causing early deterioration of the positive electrode active material, which is vulnerable to high voltage operating conditions. In addition, in order to reduce the risk of high voltage operating conditions, commercially available electrolytes and/or a negative electrode should be changed.

However, according to an embodiment of the present invention, the voltage range in which the positive electrode active material has appropriate capacity may shift to a low voltage region (preferably 4.2 V or less) by providing a bimodal-type positive electrode active material including a nickel-based lithium composite oxide (a first lithium composite oxide) and a cobalt-free lithium composite oxide (a second lithium composite oxide).

Lithium secondary battery

According to another aspect of the present invention, there is provided a positive electrode including a positive electrode current collector and a positive electrode active material layer formed on the positive electrode current collector. The positive electrode active material layer may include the positive electrode active material according to various embodiments of the present invention. Since the content of positive electrode active material is the same as described above, detailed description will be omitted for convenience, and only the remaining components not described above will be described below.

The positive electrode current collector is not particularly limited as long as it does not cause a chemical change in a battery and has conductivity, and for example, stainless steel, aluminum, nickel, titanium, calcined carbon, or aluminum or stainless steel whose surface is treated with carbon, nickel, titanium or silver may be used. In addition, the positive electrode current collector may conventionally have a thickness of 3 to 500 μm, and fine irregularities may be formed on the surface of the current collector, thereby increasing the adhesive strength of a positive electrode active material. For example, the positive electrode current collector may be used in various forms such as a film, a sheet, a foil, a net, a porous body, foam, a non-woven fabric, etc.

The positive electrode active material layer may be prepared by coating the positive electrode current collector with a positive electrode slurry composition including the positive electrode active material, a conductive material, and optionally as needed, a binder.

Here, the positive electrode active material is included at 80 to 99 wt%, and specifically, 85 to 98.5 wt% with respect to the total weight of a positive electrode slurry for forming the positive electrode active material layer. When the positive electrode active material is included in the above content range, excellent capacity characteristics may be exhibited, but the present invention is not limited thereto.

The conductive material is used to impart conductivity to an electrode, and is not particularly limited as long as it has electron conductivity without causing a chemical change in a battery. A specific example of the conductive material may be graphite such as natural graphite or artificial graphite; a carbon-based material such as carbon black, acetylene black, Ketjen black, channel black, furnace black, lamp black, thermal black or a carbon fiber; a metal powder or metal fiber consisting of copper, nickel, aluminum, or silver; a conductive whisker consisting of zinc oxide or potassium titanate; a conductive metal oxide such as titanium oxide; or a conductive polymer such as a polyphenylene derivative, and one or a mixture of two or more thereof may be used. The conductive material may be generally contained at 0.1 to 15 wt% with respect to the total weight of a positive electrode slurry for forming the positive electrode active material layer.

The binder serves to improve the adhesion between particles of the positive electrode active material and the adhesion between the positive electrode active material and the current collector. A specific example of the binder may be polyvinylidene fluoride (PVDF), a vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, tetrafluoroethylene, polyethylene, polypropylene, an ethylenepropylene-diene polymer (EPDM), a sulfonated EPDM, styrene butadiene rubber (SBR), fluorine rubber, or various copolymers thereof, and one or a mixture of two or more thereof may be used. The binder may be included at 0.1 to 15 wt% with respect to the total weight of a positive electrode slurry for forming the positive electrode active material layer.

The positive electrode may be manufactured according to a conventional method of manufacturing a positive electrode, except that the above-described positive electrode active material is used. Specifically, the positive electrode may be manufactured by coating the positive electrode current collector with a positive electrode slurry composition prepared by dissolving or dispersing the positive electrode active material, and optionally, a binder and a conductive material in a solvent, and drying and rolling the resulting product.

The solvent may be a solvent generally used in the art, and may be dimethyl sulfoxide (DMSO), isopropyl alcohol, N-methylpyrrolidone (NMP), acetone or water, and one or a mixture of two or more thereof may be used. In consideration of the coating thickness and production yield of a slurry, the solvent is used at a sufficient amount for dissolving or dispersing the positive electrode active material, the conductive material and the binder and then imparting a viscosity for exhibiting excellent thickness uniformity when the slurry is applied to manufacture a positive electrode.

In addition, in another exemplary embodiment, the positive electrode may be manufactured by casting the positive electrode slurry composition on a separate support and laminating a film obtained by delamination from the support on the positive electrode current collector.

Moreover, still another aspect of the present invention provides an electrochemical device including the above-described positive electrode. The electrochemical device may be, specifically, a battery, a capacitor, and more specifically, a lithium secondary battery.

The lithium secondary battery may specifically include a positive electrode, a negative electrode disposed opposite to the positive electrode, and a separator and a liquid electrolyte, which are interposed between the positive electrode and the negative electrode. Here, since the positive electrode is the same as described above, for convenience, detailed description of the positive electrode will be omitted, and other components which have not been described above will be described in detail.

The lithium secondary battery may further include a battery case accommodating an electrode assembly of the positive electrode, the negative electrode and the separator, and optionally, a sealing member for sealing the battery case.

The negative electrode may include a negative electrode current collector and a negative electrode active material layer disposed on the negative electrode current collector.

The negative electrode current collector is not particularly limited as long as it has high conductivity without causing a chemical change in a battery, and may be, for example, copper, stainless steel, aluminum, nickel, titanium, calcined coke, or copper or stainless steel whose surface is treated with carbon, nickel, titanium or silver, or an aluminum-cadmium alloy. In addition, the negative electrode current collector may generally have a thickness of 3 $\mu$m to 500 $\mu$m, and like the positive electrode current collector, fine irregularities may be formed on the current collector surface, thereby enhancing the binding strength of the negative electrode active material. For example, the negative electrode current collector may be used in various forms such as a film, a sheet, a foil, a net, a porous body, foam, a non-woven fabric, etc.

The negative electrode active material layer may be formed by coating the negative electrode current collector with a negative electrode slurry composition including the negative electrode active material, a conductive material, and optionally as needed, a binder.

As the negative electrode active material, a compound enabling the reversible intercalation and deintercalation of lithium may be used. A specific example of the negative electrode active material may be a carbonaceous material such as artificial graphite, natural graphite, graphitized carbon fiber or amorphous carbon; a metallic compound capable of alloying with lithium, such as Si, Al, Sn, Pb, Zn, Bi, In, Mg, Ga, Cd, an Si alloy, an Sn alloy or an Al alloy; a metal oxide capable of doping and dedoping lithium such as $SiO_\beta$ (0<$\beta$<2), $SnO_2$, vanadium oxide, or lithium vanadium oxide; or a composite including the metallic compound and the carbonaceous material such as an Si-C composite or an Sn-C composite, and any one or a mixture of two or more thereof may be used. In addition, as the negative electrode active material, a metallic lithium thin film may be used. In addition, as a carbon material, both low-crystalline carbon and high-crystalline carbon may be used. Representative examples of the low-crystalline carbon include soft carbon and hard carbon, and representative examples of the high-crystalline carbon include amorphous, sheet-type, flake-type, spherical or fiber-type natural or artificial graphite, Kish graphite, pyrolytic carbon, mesophase pitch-based carbon fiber, meso-carbon microbeads, mesophase pitches, and high-temperature calcined carbon such as petroleum or coal tar pitch derived cokes.

The negative electrode active material may be included at 80 wt% to 99 wt% with respect to the total weight of of a negative electrode slurry for forming the negative electrode active material layer.

The binder is a component aiding bonding between a conductive material, an active material and a current collector, and may be generally added at 0.1 wt% to 10 wt% with respect to the total weight of of a negative electrode slurry for forming the negative electrode active material layer. Examples of the binder may include polyvinylidene fluoride (PVDF), polyvinyl alcohol, carboxymethylcellulose (CMC), starch, hydroxypropylcellulose, regenerated cellulose, polyvinylpyrrolidone, tetrafluoroethylene, polyethylene, polypropylene, ethylene-propylene-diene monomer (EPDM), sulfonated EPDM, styrene butadiene rubber, nitrile-butadiene rubber, fluorine rubber, and various copolymers thereof.

The conductive material is a component for further improving the conductivity of the negative electrode active material, and may be added at 10 wt% or less, and preferably, 5 wt% or less with respect to the total weight of of a negative electrode slurry for forming the negative electrode active material layer. The conductive material is not particularly limited as long as it does not cause a chemical change in the battery, and has conductivity, and may be, for example, graphite such as natural graphite or artificial graphite; carbon black such as acetylene black, Ketjen black, channel black, furnace black, lamp black or thermal black; a conductive fiber such as a carbon fiber or a metal fiber; a conductive powder such as fluorinated carbon, aluminum, or nickel powder; a conductive whisker such as zinc oxide or potassium titanate; a conductive metal oxide such as titanium oxide; or a conductive material such as a polyphenylene or a derivative thereof.

In an exemplary embodiment, the negative electrode active material layer may be prepared by coating the negative electrode current collector with a negative electrode slurry composition prepared by dissolving or dispersing a negative electrode active material, and optionally, a binder and a conductive material in a solvent, and drying the coated composition, or may be prepared by casting the negative electrode slurry composition on a separate support and then laminating a film delaminated from the support on the negative electrode current collector.

Meanwhile, in the lithium secondary battery, the separator is not particularly limited as long as it is generally used in a lithium secondary battery to separate a negative electrode from a positive electrode and provide a diffusion path for lithium ions, and particularly, the separator has low resistance to ion mobility of a liquid electrolyte and an excellent electrolyte solution impregnability. Specifically, a porous polymer film, for example, a porous polymer film prepared of a polyolefin-based polymer such as an ethylene homopolymer, a propylene homopolymer, an ethylene/butene copolymer, an ethylene/hexene copolymer and an ethylene/methacrylate copolymer, or a stacked structure including two or more layers thereof may be used. In addition, a conventional porous non-woven fabric, for example, a non-woven fabric formed of a high melting point glass fiber or a polyethylene terephthalate fiber may be used. In addition, a coated separator including a ceramic component or a polymer material may be used to ensure thermal resistance or mechanical strength, and may be optionally used in a single- or multi-layered structure.

In addition, the electrolyte used in the present invention may be an organic electrolyte, an inorganic electrolyte, a solid polymer electrolyte, a gel-type polymer electrolyte, a solid inorganic electrolyte, or a molten-type inorganic electrolyte, which is able to be used in the production of a lithium secondary battery, but the present invention is not limited thereto.

Specifically, the electrolyte may include an organic solvent and a lithium salt.

The organic solvent is not particularly limited as long as it can serve as a medium enabling the movement of ions involved in an electrochemical reaction of a battery. Specifically, the organic solvent may be an ester-based solvent such as methyl acetate, ethyl acetate, $\gamma$-butyrolactone, or $\varepsilon$-caprolactone; an ether-based solvent such as dibutyl ether or tetrahydrofuran; a ketone-based solvent such as cyclohexanone; an aromatic hydrocarbon-based solvent such as benzene or fluorobenzene; a carbonate-based solvent such as dimethyl carbonate (DMC), diethyl carbonate (DEC), methyl ethyl carbonate (MEC), ethyl methyl carbonate (EMC), ethylene carbonate (EC), or propylene carbonate (PC); an alcohol-based solvent such as ethyl alcohol or isopropyl alcohol; a nitrile-based solvent such as R-CN (R is a linear, branched or cyclic $C_2$ to $C_{20}$ hydrocarbon group, and may include a double bonded aromatic ring or an ether bond); an amide-based solvent such as dimethylformamide; a dioxolane-based solvent such as 1,3-dioxolane; or a sulfolane-based solvent. Among these, a carbonate-based solvent is preferably used, and a mixture of a cyclic carbonate (for example, ethylene carbonate or propylene carbonate) having high ion conductivity and high permittivity to increase the charging/-discharging performance of a battery and a low-viscosity linear carbonate-based compound (for example, ethyl methyl carbonate, dimethyl carbonate or diethyl carbonate) is more preferably used. In this case, by using a mixture of a cyclic carbonate and a chain-type carbonate in a volume ratio of approximately 1:1 to 1:9, the electrolyte solution may exhibit excellent performance.

The lithium salt is not particularly limited as long as it is a compound capable of providing a lithium ion used in a lithium secondary battery. Specifically, the lithium salt may be $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiCl$, $LiI$, or $LiB(C_2O_4)_2$. The concentration of the lithium salt is preferably in the range of 0.1 M to 2.0 M. When the concentration of the lithium salt is included in the above-mentioned range, since the electrolyte has suitable conductivity and viscosity, the electrolyte solution can exhibit excellent electrolytic performance and lithium ions can effectively migrate.

When the electrolyte used herein is a solid electrolyte, for example, a solid inorganic electrolyte such as a sulfide-based solid electrolyte, an oxide-based solid electrolyte, a nitride-based solid electrolyte, or a halide-based solid electrolyte may be used, and preferably, a sulfide-based solid electrolyte is used.

As a material for a sulfide-based solid electrolyte, a solid electrolyte containing Li, an X element (here, X is at least one selected from P, As, Sb, Si, Ge, Sn, B, Al, Ga and In) and S may be used. Examples of the sulfide-based solid electrolyte material may include $Li_2S-P_2S_5$, $Li_2S-P_2S_5-LiX$ (here, X is a halogen element such as I or Cl), $Li_2S-P_2S_5-Li_2O$, $Li_2S-P_2S_5-Li_2O-LiI$, $Li_2S-SiS_2$, $Li_2S-SiS_2-LiI$, $Li_2S-SiS_2-LiBr$, $Li_2S-SiS_2-LiCl$, $Li_2S-SiS_2-B_2S_3-LiI$, $Li_2S-SiS_2-P_2S_5-LiI$, $Li_2S-B_2S_3$, $Li_2S-P_2S_5-Z_mS_n$ (here, m and n are integers, and Z is Ge, Zn or Ga), $Li_2S-GeS_2$, $Li_2S-SiS_2-Li_3PO_4$, and $Li_2S-SiS_2-Li_pMO_q$ (here, p and q are integers, and M is P, Si, Ge, B, Al, Ga or In).

A solid electrolyte, and preferably, a sulfide-based solid electrolyte may be amorphous, crystalline, or a state in which an amorphous phase and crystalline phase are mixed.

Materials for an oxide-based solid electrolyte include $Li_7La_3Zr_2O_{12}$, $Li_{7-x}La_3Zr_{1-x}Nb_xO_{12}$, $Li_{7-3x}La_3Zr_2Al_xO_{12}$, $Li_{3x}La_{2/3-x}TiO_3$, $Li_{1+x}Al_xTi_{2-x}(PO_4)_3$, $Li_{1+x}Al_xGe_{2-x}(PO_4)_3$, $Li_3PO_4$, $Li_{3+x}PO_{4-x}N_x$ (LiPON), and $Li_{2+2x}Zn_{1-x}GeO_4$ (LISICON).

The above-described solid electrolyte may be disposed as a separate layer (solid electrolyte layer) between a positive electrode and a negative electrode. In addition, the solid electrolyte may be partially included in a positive electrode active material layer of the positive electrode independent of the solid electrolyte layer, or the solid electrolyte may be partially included in a negative electrode active material of the negative electrode independent of the solid electrolyte layer.

To enhance the lifetime characteristics of the battery, inhibit a decrease in battery capacity, and enhance the discharge capacity of the battery, the electrolyte may further include one or more types of additives, for example, a haloalkylene carbonate-based compound such as difluoroethylene carbonate, pyridine, triethylphosphite, triethanolamine, cyclic ether, ethylene diamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol or aluminum trichloride, in addition to the components of the electrolyte. Here, the additive(s) may be included at 0.1 wt% to 5 wt% with respect to the total weight of the electrolyte.

Since the lithium secondary battery including the positive electrode active material according to the present invention stably exhibits an excellent discharge capacity, excellent output characteristics and excellent lifetime characteristics, it is useful in portable devices such as a mobile phone, a notebook computer and a digital camera and an electric vehicle field such as a hybrid electric vehicle (HEV).

The outer shape of the lithium secondary battery according to the present invention is not particularly limited, but may be a cylindrical, prismatic, pouch or coin type. In addition, the lithium secondary battery may be used in a battery cell that is not only used as a power source of a small device, but also preferably used as a unit battery for a medium-to-large battery module including a plurality of battery cells.

According to still another exemplary embodiment of the present invention, a battery module including the lithium secondary battery as a unit cell and/or a battery pack including the same is provided.

The battery module or the battery pack may be used as a power source of any one or more medium-to-large devices including a power tool; an electric motor vehicle such as an electric vehicle (EV), a hybrid electric vehicle, and a plug-in hybrid electric vehicle (PHEV); and a power storage system.

Hereinafter, the present invention will be described in further detail with reference to examples. However, these examples are merely provided to exemplify the present invention, and thus the scope of the present invention will not be construed not to be limited by these examples.

**Preparation Example 1. Preparation of positive electrode active material**

Comparative Example 1

An $Ni_{0.75}Mn_{0.25}(OH)_2$ precursor (a small particle precursor) with an average particle diameter of about 3 $\mu$m and an $Ni_{0.75}Mn_{0.25}(OH)_2$ precursor (a large particle precursor) with an average particle diameter of about 12 $\mu$m were respectively synthesized using an aqueous metal salt solution in which nickel sulfate and manganese sulfate were mixed at a molar ratio of 75:25 through a known co-precipitation method.

Subsequently, a precursor mixture in which the small particle precursor and the large particle precursor were mixed in a weight ratio of 3:7 and LiOH (Li/(metal excluding Li) molar ratio = 1.05±0.05) were mixed and subjected to first heat-treatment at 830 °C in an $O_2$ atmosphere for 12 hours and second heat-treatment at 700 °C in an $O_2$ atmosphere for 12 hours to obtain a final product (bimodal).

Comparative Example 2

An $Ni_{0.75}Mn_{0.25}(OH)_2$ precursor (a small particle precursor) with an average particle diameter of about 3 μm and an $Ni_{0.75}Mn_{0.25}(OH)_2$ precursor (a large particle precursor) with an average particle diameter of about 12 μm were respectively synthesized using an aqueous metal salt solution in which nickel sulfate and manganese sulfate were mixed at a molar ratio of 75:25 through a known co-precipitation method.
Subsequently, a precursor mixture in which the small particle precursor and the large particle precursor were mixed in a weight ratio of 7:3 and LiOH (Li/(metal excluding Li) molar ratio = 1.05±0.05) were mixed and subjected to first heat-treatment at 830 °C in an $O_2$ atmosphere for 12 hours to obtain an intermediate product.
Afterward, the intermediate product and $Co_3O_4$ (weighed based on the overall composition of the final product (bimodal) so that the mole fraction of cobalt among the metal elements excluding lithium was 0.02) were mixed and subjected to second heat-treatment at 700 °C in an $O_2$ atmosphere for 12 hours to obtain a final product (bimodal) in which a cobalt-containing coating layer was formed.

Comparative Example 3

An $Ni_{0.75}Mn_{0.25}(OH)_2$ precursor (a large particle precursor) with an average particle diameter of about 12 μm was synthesized using an aqueous metal salt solution in which nickel sulfate and manganese sulfate were mixed at a molar ratio of 75:25 through a known co-precipitation method.
Subsequently, the large particle precursor and LiOH (Li/(metal excluding Li) molar ratio = 1.05±0.05) were mixed and subjected to first heat-treatment at 800 °C in an $O_2$ atmosphere for 12 hours and second heat-treatment at 700 °C in an $O_2$ atmosphere for 12 hours to obtain a final product (a large particle).

Comparative Example 4

An $Ni_{0.75}Mn_{0.25}(OH)_2$ precursor (a small particle precursor) with an average particle diameter of about 3 μm was synthesized using an aqueous metal salt solution in which nickel sulfate and manganese sulfate were mixed at a molar ratio of 75:25 through a known co-precipitation method.
Subsequently, the small particle precursor and LiOH (Li/(metal excluding Li) molar ratio = 1.05±0.05) were mixed and subjected to first heat-treatment at 800 °C in an $O_2$ atmosphere for 12 hours and second heat-treatment at 700 °C in an $O_2$ atmosphere for 12 hours to obtain a final product (a small particle).

Comparative Example 5

An $Ni_{0.75}Mn_{0.25}(OH)_2$ precursor (a small particle precursor) with an average particle diameter of about 3 μm was synthesized using an aqueous metal salt solution in which nickel sulfate and manganese sulfate were mixed at a molar ratio of 75:25 through a known co-precipitation method.
Subsequently, the small particle precursor and LiOH (Li/(metal excluding Li) molar ratio = 1.05±0.05) were mixed and subjected to first heat-treatment at 800 °C in an $O_2$ atmosphere for 12 hours to obtain an intermediate product.
Afterward, the intermediate product and $Co_3O_4$ (weighed based on the overall composition of the final product (a small particle) so that the mole fraction of cobalt among the metal elements excluding lithium was 0.02) were mixed and subjected to second heat-treatment at 700 °C in an $O_2$ atmosphere for 12 hours to obtain a final product (a small particle) in which a cobalt-containing coating layer was formed.

Example 1

An $Ni_{0.91}Co_{0.08}Mn_{0.01}(OH)_2$ precursor (a small particle precursor) with an average particle diameter of about 3 μm was synthesized using an aqueous metal salt solution in which nickel sulfate, cobalt sulfate, and manganese sulfate were mixed at a molar ratio of 91:8:1 through a known co-precipitation method.
Subsequently, the small particle precursor and LiOH (Li/(metal excluding Li) molar ratio = 1.05±0.05) were mixed and subjected to first heat-treatment at 800 °C in an $O_2$ atmosphere for 12 hours, and then vacuum drying at 120 °C and washing were performed to obtain an intermediate product.
Afterward, the intermediate product and $Co_3O_4$ (weighed based on the overall composition of the final product (a small particle) so that the mole fraction of cobalt among the metal elements excluding lithium was 0.03) were mixed and subjected to second heat-treatment at 700 °C in an $O_2$ atmosphere for 12 hours to obtain a final product (a small particle).

Afterward, the final product (a small particle) and the final product (a large particle) prepared in Comparative Example 3 were mixed at a weight ratio of 1:9 to obtain a final product (bimodal).

Example 2

A final product (bimodal) was prepared in the same manner as in Example 1, except that the final product (a small particle) and the final product (a large particle) prepared in Comparative Example 3 were mixed at a weight ratio of 2:8.

Example 3

A final product (bimodal) was prepared in the same manner as in Example 1, except that the final product (a small particle) and the final product (a large particle) prepared in Comparative Example 3 were mixed at a weight ratio of 3:7.

Example 4

An $Ni_{0.75}Mn_{0.25}(OH)_2$ precursor (a large particle precursor) with an average particle diameter of about 12 $\mu$m was synthesized using an aqueous metal salt solution in which nickel sulfate and manganese sulfate were mixed at a molar ratio of 75:25 through a known co-precipitation method.

Subsequently, the large particle precursor and LiOH (Li/(metal excluding Li) molar ratio = 1.05±0.05) were mixed and subjected to first heat-treatment at 800 °C in an $O_2$ atmosphere for 12 hours to obtain an intermediate product.

Afterward, the intermediate product and $Co_3O_4$ (weighed based on the overall composition of the final product (a large particle) so that the mole fraction of cobalt among the metal elements excluding lithium was 0.01) were mixed and subjected to second heat-treatment at 700 °C in an $O_2$ atmosphere for 12 hours to obtain a final product (a large particle) in which a cobalt-containing coating layer was formed.

Afterward, the final product (a small particle) prepared in Example 1 and the final product (a large particle) were mixed at a weight ratio of 1:9 to obtain a final product (bimodal).

The compositions confirmed through ICP analysis of the positive electrode active materials (final products) prepared according to Preparation Example 1 are shown in Table 1 below.

[Table 1]

| Classification | Ni (mol%) | Co (mol%) | Mn (mol%) |
|---|---|---|---|
| Example 1 | 76.3 | 1.1 | 22.6 |
| Example 2 | 76.6 | 2.2 | 21.2 |
| Example 3 | 77.5 | 3.2 | 193 |
| Example 4 | 75.6 | 2.0 | 22.4 |
| Comparative Example 1 | 75.5 | - | 24.5 |
| Comparative Example 2 | 77.0 | 2.0 | 21.0 |
| Comparative Example 3 | 75.0 | - | 25.0 |
| Comparative Example 4 | 75.0 | - | 25.0 |
| Comparative Example 5 | 73.5 | 2.0 | 24.5 |

Preparation Example 2. Manufacture of lithium secondary battery (half-cell)

94 wt% of each positive electrode active material prepared according to Preparation Example 1, 3 wt% of carbon black, and 3 wt% of a PVDF binder were dispersed in 30 g of N-methyl-2 pyrrolidone (NMP) to prepare a positive electrode slurry. The positive electrode slurry was uniformly applied on an aluminum thin film with a thickness of 15 $\mu$m and vacuum dried at 135 °C to manufacture a positive electrode for a lithium secondary battery.

A half-cell was manufactured using a lithium foil as a counter electrode to the positive electrode, a porous polyethylene membrane (Celgard 2300, thickness: 25 $\mu$m) as a separator, and an electrolyte in which $LiPF_6$ was dissolved at a concentration of 1.15 M in a mixed solvent of ethylene carbonate and ethyl methyl carbonate at a volume ratio of 3:7.

Experimental Example 1. Crystal structure analysis of positive electrode active material

For the lithium secondary batteries manufactured in Preparation Example 2 using positive electrode active materials according to Examples 1 to 3 and Comparative Examples 1 to 3, after completing the 2-cycle formation process using an electrochemical analysis device (Toscat-3100 from TOYO SYSTEM CO., LTD.) under the conditions of 25 °C, a voltage range of 3.0 V to 4.4 V, and 0.1 C/0.1 C, charging/discharging was performed under the conditions of 25 °C, a voltage range of 3.0 V to 4.4 V, and 0.1 C/0.1 C.

At this time, with the voltage (V) and battery capacity (Q) measured during initial discharge according to the above charge/discharge conditions, the X-axis was set to the voltage (V), the Y-axis was set to the battery capacity (Q), and the dQ/dV profile was obtained by differentiating the battery capacity (Q) with respect to the voltage (V).

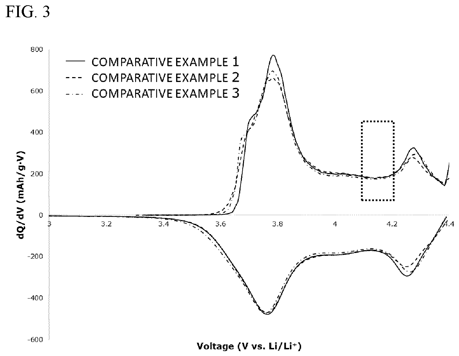

FIG. 2 shows the dQ/dV profile during initial discharge of lithium secondary batteries manufactured using the positive electrode active materials according to Examples 1 to 3, and FIG. 3 shows the dQ/dV profile during initial discharge of lithium secondary batteries manufactured using the positive electrode active materials according to Comparative Examples 1 to 3.

Referring to FIGS. 2 and 3, it can be seen that in the case of lithium secondary batteries using the positive electrode active materials according to Examples 1 to 3, there are peaks in the charging region in the voltage range of about 4.1 V to about 4.2 V, whereas in the case of lithium secondary batteries using positive electrode active materials according to Comparative Examples 1 to 3, the corresponding peaks do not appear in the voltage range of about 4.2 V or less.

In other words, according to the above results, the lithium secondary batteries using the positive electrode active materials according to Comparative Examples 1 to 3 can have appropriate capacity in the voltage range of about 4.3 V, whereas the lithium secondary batteries using the positive electrode active materials according to Examples 1 to 3 can have appropriate capacity in the voltage range of less than 4.2 V

Experimental Example 2. Evaluation of electrochemical properties of lithium secondary battery (half-cell)

For the lithium secondary batteries (half-cell) manufactured in Preparation Example 2, charge/discharge experiments were conducted using an electrochemical analysis device (Toscat-3100 from TOYO SYSTEM CO., LTD.) at 25 °C, a voltage range of 3.0 V to 4.3 V, and a discharge rate of 0.1 C to measure initial charge capacity, initial discharge capacity, and initial efficiency.

For the same lithium secondary batteries (half-cell), after charging/discharging was performed 50 times using an electrochemical analysis device (Toscat-3100 from TOYO SYSTEM CO., LTD.) under the conditions of 25 °C, a voltage range of 3.0 V to 4.3 V, and 1 C/1 C, the ratio of the discharge capacity at the $50^{th}$ cycle to the initial capacity (cycle capacity retention) was measured.

The measurement results are shown in Table 2.

[Table 2]

| Classification | Initial charge capacity | Initial discharge capacity | Initial efficiency | $50^{th}$ cycle capacity retention |
|---|---|---|---|---|
| | mAh/g | mAh/g | % | % |
| Example 1 | 204.1 | 187.7 | 91.9 | 98.9 |
| Example 2 | 207.9 | 191.4 | 92.1 | 986 |
| Example 3 | 210.9 | 193.6 | 91.8 | 98.2 |
| Example 4 | 205.6 | 187.9 | 91.4 | 98.7 |
| Comparative Example 1 | 204.5 | 183.5 | 89.7 | 97.8 |
| Comparative Example 2 | 205.4 | 185.4 | 90.3 | 97.5 |
| Comparative Example 3 | 203.9 | 183.8 | 90.1 | 97.9 |
| Comparative Example 4 | 205.7 | 185.0 | 89.9 | 93.2 |
| Comparative Example 5 | 203.7 | 188.7 | 92.6 | 94.1 |

Referring to the results in Table 2, it can be seen that compared to the results of Comparative Examples 1 and 2, which are bimodal-type positive electrode active materials consisting of small particles and large particles with a cobalt-free composition, the electrochemical properties of the bimodal-type positive electrode active material including a nickel-based lithium composite oxide containing cobalt and a cobalt-free lithium composite oxide are much better.

Referring to the results of Comparative Examples 1 and 2, even when cobalt is present at an appropriate level based on the overall composition of the bimodal-type positive electrode active material by coating the positive electrode active material of Comparative Example 1 with cobalt, no significant changes are confirmed due to the cobalt coating, as long as the bulk particles have a cobalt-free composition.

Experimental Example 3. Analysis of residual lithium in positive electrode active material

Analysis of the residual lithium (lithium impurity) content in the positive electrode active materials prepared according to Preparation Example 1 was performed through a pH titration method. The pH titration method measured the content of residual lithium (lithium impurity) based on the amount of 0.1 M HCl used until the positive electrode active materials reached pH 4 through the pH titration. Specifically, 5 g of each positive electrode active material prepared according to Preparation Example 1 was added to 100 ml of DIW, stirred for 15 minutes, and then filtered. After taking 50 ml of the filtered solution, 0.1 M HCl was added to the filtered solution to measure the HCl consumption according to the pH change, and then the sum of LiOH and $Li_2CO_3$ contents was calculated.

The measurement results are shown in Table 3.

[Table 3]

| Classification | Residual lithium content (ppm) |
|---|---|
| Example 1 | 4,472 |
| Example 2 | 4,216 |
| Example 3 | 3,966 |
| Example 4 | 3,422 |
| Comparative Example 1 | 5,478 |
| Comparative Example 2 | 5,050 |
| Comparative Example 3 | 6,968 |
| Comparative Example 4 | 7,616 |
| Comparative Example 5 | 6,263 |

Referring to the results in Table 3, overall, it can be seen that the residual lithium content in the positive electrode active materials according to Examples is less than the residual lithium content in the positive electrode active materials according to Comparative Examples. When bulk particles are coated, the raw material of coating and residual lithium present on the surface of bulk particles react to form a coating layer, thereby lowering the residual lithium content. Considering that the residual lithium content in the cobalt-coated positive electrode active materials according to Comparative Examples 2 and 5 is higher compared to Examples, it can be seen that the generation of residual lithium is suppressed much more in the bimodal-type positive electrode active material using an appropriate combination of a nickel-based lithium composite oxide containing cobalt and a cobalt-free lithium composite oxide.

Accordingly, the residual lithium content (the sum of the LiOH and $Li_2CO_3$ contents) in the positive electrode active materials according to Examples of the present invention can be controlled to 5,000 ppm, preferably 4,500 ppm or less.

According to the present invention, it is possible to improve electrochemical properties and stability compared to an existing lithium composite oxide with a low-cobalt or cobalt-free composition by providing a bimodal-type positive electrode active material including lithium composite oxides with different particle diameters and compositions, more particularly, including a nickel-based lithium composite oxide (a first lithium composite oxide) and a cobalt-free lithium composite oxide (a second lithium composite oxide).

In particular, the electrochemical properties and stability can be improved compared to an existing lithium composite oxide with a low-cobalt or cobalt-free composition by forming a predetermined coating layer on the surface(s) of first bulk particles constituting the first lithium composite oxide and/or second bulk particles constituting the second lithium composite oxide.

When a coating layer including a cobalt-containing oxide is formed on the surface(s) of first bulk particles constituting the first lithium composite oxide and/or second bulk particles constituting the second lithium composite oxide, the cobalt content in the first bulk particles can be further lowered, and as a result, the cobalt content in the overall composition (bulk composition) of the bimodal-type positive electrode active material can be lowered, making it possible to achieve the object of reducing the cost of the positive electrode active material.

According to the present invention, it is possible to further improve the electrochemical properties of the positive electrode active material by designing an appropriate metal composition of a nickel-based lithium composite oxide (a first lithium composite oxide) and a cobalt-free lithium composite oxide (a second lithium composite oxide) in the bimodal-type positive electrode active material.

Although the embodiments of the present invention have been described, those skilled in the art can modify and change the present invention in various ways by changing, deleting, or adding components without departing from the spirit of the present invention as set forth in the claims, which will also be included within the scope of the rights of the present invention.

## Claims

1. A bimodal-type positive electrode active material comprising:

   a first lithium composite oxide; and
   a second lithium composite oxide with an average particle diameter larger than that of the first lithium composite oxide,
   wherein the first lithium composite oxide includes first bulk particles including at least nickel and cobalt, and the second lithium composite oxide includes cobalt-free second bulk particles.

2. The positive electrode active material of claim 1, wherein the mole fraction of nickel in the first bulk particles is greater than the mole fraction of nickel in the second bulk particles, and
   wherein the mole fraction of manganese in the first bulk particles is less than the mole fraction of manganese in the second bulk particles.

3. The positive electrode active material of claim 1, wherein the mole fraction of nickel among the metal elements excluding lithium in the first bulk particles is more than 0.75, andwherein the mole fraction of cobalt among the metal elements excluding lithium in the first bulk particles is 0.15 or less.

4. The positive electrode active material of any one of claims 1 to 3, wherein the first bulk particle is represented by Chemical Formula 1 below,

   [Chemical Formula 1]    $Li_wNi_{1-(x+y+z)}Co_xM1_yM2_zO_2$

   Wherein,

   M1 is at least one selected from Mn and Al,
   M2 is at least one selected from P, Sr, Ba, B, Ce, Cr, Mn, Mo, Na, K, Ti, Zr, Al, Hf, Ta, Mg, V, Zn, Si, Y, Sn, Ge, Nb, W, Ca, Ga, Sb, Fe, Nd, and Cu,
   M1 and M2 are different, and

   $$0.5{\leq}w{\leq}1.5,\ 0{<}x{\leq}0.40,\ 0{\leq}y{\leq}0.30,\ 0{\leq}z{\leq}0.20$$

5. The positive electrode active material of any one of claims 1 to 4, wherein the second bulk particle is represented by Chemical Formula 2 below,

   [Chemical Formula 2]    $Li_aNi_{1-(b+c)}M3_bM4_cO_{2-\alpha}X_\alpha$

   Wherein,

   M3 is at least one selected from Mn and Al,
   M4 is at least one selected from Sr, Ba, B, Ce, Cr, Mn, Mo, Na, K, Ti, Zr, Al, Hf, Ta, Mg, V, Zn, Si, Y, Sn, Ge, Nb, W, Ca, Ga, Sb, Fe, Nd, and Cu,
   M3 and M4 are different,
   X is at least one anionic element selected from F, P, S, Cl, and Br, and

$$0.5 \leq a \leq 1.5,\ 0 \leq b \leq 0.50,\ 0 \leq c \leq 0.20,\ 0 \leq \alpha \leq 0.20$$

6. The positive electrode active material of any one of claims 1 to 4, wherein a coating layer is present on at least a part of the surface of the first bulk particle, and the coating layer includes a metal oxide represented by Chemical Formula 3 below,

   [Chemical Formula 3]          $Li_d M5_e O_f$

   Wherein,
   M5 is at least one selected from Ni, Co, P, Sr, Ba, B, Ce, Cr, Mn, Mo, Na, K, Ti, Zr, Al, Hf, Ta, Mg, V, Zn, Si, Y, Sn, Ge, Nb, W, Ca, Ga, Sb, Fe, Nd, and Cu, and $0 \leq d \leq 8$, $0 < e \leq 8$, $0 < f \leq 13$.

7. The positive electrode active material of claim 6, wherein the coating layer present on the surface of the first bulk particle includes a cobalt-containing oxide.

8. The positive electrode active material of any one of claims 1 to 5, wherein a coating layer is present on at least a part of the surface of the second bulk particle, and the coating layer includes a metal oxide represented by Chemical Formula 4 below,

   [Chemical Formula 4]          $Li_g M6_h O_i$

   Wherein,
   M6 is at least one selected from Ni, Co, P, Sr, Ba, B, Ce, Cr, Mn, Mo, Na, K, Ti, Zr, Al, Hf, Ta, Mg, V, Zn, Si, Y, Sn, Ge, Nb, W, Ca, Ga, Sb, Fe, Nd, and Cu, and $0 \leq g \leq 8$, $0 < h \leq 8$, $0 < i \leq 13$.

9. The positive electrode active material of claim 8, wherein the coating layer present on the surface of the second bulk particle includes a cobalt-containing oxide.

10. The positive electrode active material of any one of claims 1 to 9, wherein based on the overall composition of the positive electrode active material including the first lithium composite oxide and the second lithium composite oxide, the mole fraction of cobalt among the metal elements excluding lithium is 0.05 or less.

11. The positive electrode active material of any one of claims 1 to 10, wherein based on the overall composition of the bimodal-type positive electrode active material including the first lithium composite oxide and the second lithium composite oxide, the mole fraction of manganese among the metal elements excluding lithium is 0.10 or more and 0.40 or less.

12. The positive electrode active material of any one of claims 1 to 11, wherein when a lithium secondary battery using the positive electrode active material in a positive electrode and a lithium foil as a negative electrode is charged/-discharged at 25 °C, a voltage range of 3.0 V to 4.4 V, and a discharge rate of 0.1 C, there are peaks within the charging region in the voltage range of 4.1 V to 4.2 V in a graph where the X-axis is set to the voltage (V) at initial discharge, the Y-axis is set to the battery capacity (Q) at initial discharge, and the differential capacity (dQ/dV) obtained by differentiating the battery capacity (Q) with respect to the voltage (V) is shown.

13. The positive electrode active material of any one of claims 1 to 12, wherein a coating layer is present on at least a part of the surface of the second bulk particle, and the coating layer includes a compound represented by LiX' (X' is an anionic element selected from F, Cl, and Br).

14. A positive electrode comprising the positive electrode active material according to any one of claims 1 to 13.

15. A lithium secondary battery using the positive electrode according to claim 14.

FIG. 1

FIG. 2

FIG. 3

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/181279 A1 (HOSOYA YOSUKE [JP]) 18 August 2005 (2005-08-18) * examples; tables * | 1-15 | INV. C01G53/50 H01M4/36 C01G53/504 |
| A | EP 3 965 183 A1 (ECOPRO BM CO LTD [KR]) 9 March 2022 (2022-03-09) * examples * * claims * | 1-15 | |
| A | US 11 417 875 B2 (SAMSUNG SDI CO LTD [KR]) 16 August 2022 (2022-08-16) * examples * * claims * | 1-15 | |
| A | LIU MINGXIU ET AL: "Modification study of LiF coating on cobalt-free nickel-rich LiNi0.9Mn0.1O2 layered oxide cathode materials for lithium-ion batteries", IONICS, vol. 29, no. 7, 18 May 2023 (2023-05-18), pages 2563-2572, XP093253771, DE ISSN: 0947-7047, DOI: 10.1007/s11581-023-05039-2 Retrieved from the Internet: URL:https://link.springer.com/article/10.1007/s11581-023-05039-2/fulltext.html> * abstract * | 13 | TECHNICAL FIELDS SEARCHED (IPC) H01M C01G |

The present search report has been drawn up for all claims

| Place of search | Date of completion of the search | Examiner |
|---|---|---|
| Munich | 28 February 2025 | Omegna, Anna |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 24 20 4256

This annex lists the patent family members relating to the patent documents cited in the above-mentioned European search report.
The members are as contained in the European Patent Office EDP file on
The European Patent Office is in no way liable for these particulars which are merely given for the purpose of information.

28-02-2025

| Patent document cited in search report | | Publication date | Patent family member(s) | | Publication date |
|---|---|---|---|---|---|
| US 2005181279 | A1 | 18-08-2005 | CA | 2496374 A1 | 16-08-2005 |
| | | | CN | 1658415 A | 24-08-2005 |
| | | | JP | 4237074 B2 | 11-03-2009 |
| | | | JP | 2005228706 A | 25-08-2005 |
| | | | KR | 20060041933 A | 12-05-2006 |
| | | | TW | I311827 B | 01-07-2009 |
| | | | US | 2005181279 A1 | 18-08-2005 |
| EP 3965183 | A1 | 09-03-2022 | CN | 114203981 A | 18-03-2022 |
| | | | EP | 3965183 A1 | 09-03-2022 |
| | | | JP | 7463321 B2 | 08-04-2024 |
| | | | JP | 2022042478 A | 14-03-2022 |
| | | | JP | 2023118940 A | 25-08-2023 |
| | | | KR | 20220030027 A | 10-03-2022 |
| | | | KR | 20220066232 A | 24-05-2022 |
| | | | US | 2022069289 A1 | 03-03-2022 |
| | | | US | 2024282919 A1 | 22-08-2024 |
| US 11417875 | B2 | 16-08-2022 | CN | 111146413 A | 12-05-2020 |
| | | | EP | 3647269 A1 | 06-05-2020 |
| | | | HU | E067633 T2 | 28-10-2024 |
| | | | JP | 7229145 B2 | 27-02-2023 |
| | | | JP | 7531471 B2 | 09-08-2024 |
| | | | JP | 2020072092 A | 07-05-2020 |
| | | | JP | 2022017425 A | 25-01-2022 |
| | | | KR | 20200051101 A | 13-05-2020 |
| | | | PL | 3647269 T3 | 19-08-2024 |
| | | | US | 2020144610 A1 | 07-05-2020 |

EPO FORM P0459

For more details about this annex : see Official Journal of the European Patent Office, No. 12/82